# EUROPEAN PATENT APPLICATION

(11) **EP 4 763 873 A1**
(43) Date of publication of application: **24.06.2026**
(21) Application number: 24221992.1
(22) Date of filing: 20.12.2024
(51) Int. Cl.: C08F 8/22, C08F 8/26, C08F 8/06, C08F 8/00

(54) **PREPARATION OF VINYL- AND HYDROXYL-TELECHELIC POLYETHYLENE FROM ETHYLENE**

(71) Applicant: SABIC Global Technologies B.V., 4612 PX Bergen op Zoom (NL)
(72) Inventor: Chinta, Sivadinarayana, 6160 GA Geleen (NL); Bagui, Mahuya, 6160 GA Geleen (NL); Barker, Charlotte Marina, Tempe, AZ 85281 (US); Long, Timothy Edward, Tempe, AZ 85281 (US); Sharma, Anuja, Tempe, AZ 85281 (US); Trovitch, Ryan J., Tempe, AZ 85281 (US)
(74) Representative: Sabic INDIA Intellectual Property Group

(57) **Abstract**

Processes to produce hydroxyl telechelic polyolefin-based polymers are described. A process can include contacting a di-olefinic magnesium composition with an olefin monomer in the presence of a polymerization catalyst to produce a vinyl telechelic polyolefin-based magnesium intermediate. Reacting the vinyl telechelic polyolefin-based magnesium intermediate with iodine to produce an iodovinyl polyolefin-based intermediate. Subjecting the iodovinyl-polyolefin-based intermediate to conditions suitable to produce an α,ω-hydroxyl-telechelic polyolefin-based polymer.

## Description

### Technical Field

The invention generally concerns processes to produce hydroxyl telechelic polyolefin-based polymers.

### Background Art

Polyolefins and copolymers thereof have multiple industrial uses. Polyolefins such as polyethylene and polypropylene and copolymers thereof constitute a large volume of synthetic plastic produced worldwide. Polyolefin copolymers are used in a wide variety of articles, such as films, sheets, foams, fibers, toys, bottles, containers, furniture, electronic parts, and plumbing materials. One of the issues with the wide-spread use of polyolefin copolymers is what to do with the articles once they reach the end of their usability. One solution is to simply discard the articles ("single use articles") and prepare new ones from new chemicals. A problem with this approach is the use of landfills and/or incinerators to discard and/or destroy the articles. Landfills are reaching capacity, and incinerators can create pollution. Still further, the use of new chemicals can be wasteful and/or increase the carbon footprint of the resulting article.

Recyclable polyolefins have been investigated. For example, International Application Publication No. WO 2022/214640 to Chinta et al.*,* describes functionalized polymers and methods of recycling the functionalized polymers. Building blocks for making functionalized polyolefins can include telechelic polymers. Many synthetic routes to telechelic polymers have been described in the literature. For example, U. S. Patent No. 10,752,713 to Thuilliez et al. describes the preparation of telechelic polymers using transfer agents, and Norsic *et al.* describes preparation of telechelic α,ω-iodo-vinyl-polyethylenes using transfer agents. These methods suffer in that they provide low functionality.

While methods for preparing telechelic polymers exist, the need for improvements in this field persists.

### SUMMARY OF THE INVENTION

A solution to at least one of the problems associated with the preparation of telechelic oligomers has been discovered. The discovery relates to a process that allows for the synthesis of hydroxyl telechelic polyolefin-based polymers that can be condensed with bio-based diacids to generate polyethylene-like polymers that feature hydrolysable ester linkages. Furthermore, the process can enable recycling of the hydroxyl-telechelic building blocks. Thus, providing a sustainable process. Notably, the process provides for the isolation of a salt-free dialkenyl magnesium precursor (as opposed to chain transfer reagents that are prepared and used in situ) and facilitates ethylene polymerization in the presence of a neodymium catalyst to afford chain-extended dialkenyl magnesium products featuring minimal salt contamination. Another advantage of the process is that the produced compositions have functionalities of greater than 1.7 per chain.

In one aspect of the present invention, processes to produce hydroxyl telechelic compositions (e.g., oligomers and/or polymers) are described. A process can include one or more steps (e.g., steps (a), (b), and (c)). In a first step (e.g., step (a)), a di-olefinic magnesium composition can be contacted with an olefin monomer in the presence of a polymerization catalyst at a temperature of 25 °C to 130 °C and a pressure of 0.1 MPa to 0.9 MPa, preferably 0.25 MPa to 0.4 MPa, to produce a vinyl telechelic polyolefin-based magnesium intermediate. In some aspects, the polymerization catalyst is a neodymium-based catalyst (e.g., (C₅Me₅)₂NdCl₂Li(OEt₂)₂). In some aspects, the neodymium-based catalyst to magnesium molar percentage ranges from 0.5 mol% to 5 mol%, preferably 3 mol %. In some aspects, the di-olefinic magnesium composition can be purified prior to step (a) by: (i) dissolving a di-olefinic magnesium composition crude product in a hydrocarbon solvent preferably pentane to produce a di-olefinic magnesium crude product / hydrocarbon solution; (ii) filtering the di-olefinic magnesium crude product / hydrocarbon solution through a filter aid; and (iii) removing the hydrocarbon solvent to produce the di-olefinic magnesium composition of step (a). The di-olefinic magnesium composition crude product can be prepared by: (i) contacting a terminally halogenated (e.g., chlorinated or brominated)-1-olefin with a magnesium source in polar aprotic solvent at 0 °C to 25 °C under an inert atmosphere to produce a terminal magnesium halogenated-1-olefin composition; and (ii) contacting the terminal magnesium halogenated-1-olefin composition with dioxane to produce the di-olefinic magnesium composition. The resulting di-olefinic magnesium product can be isolated. In some aspects, the terminally halogenated-1-olefin can have a carbon number of 8 to 20, preferably 9 to 15, more preferably 10 to 12. In a preferred aspect, the terminally halogenated-1-olefin is 11-bromo-1-undecene.

In a second step (e.g., step (b)), the process can include reacting the vinyl telechelic polyolefin-based magnesium intermediate with iodine (I₂) at 20 °C to 30 °C to produce an iodovinyl polyolefin-based intermediate. The iodine to magnesium (I/Mg) molar ratio can range from 2 to 2.5 preferably 2.

In a third step (e.g., step (c)), the process can include subjecting the iodovinyl-polyolefin-based intermediate to conditions suitable to produce an α,ω-hydroxyl-telechelic polyolefin-based polymer. Step (c) can further include (i) contacting the iodovinyl-polyolefin-based intermediate with base at a temperature of 20 °C to 110 °C, preferably 95 °C to produce a vinyl-telechelic polyolefin-based polymer; and (ii) subjecting the vinyl-telechelic polyolefin-based polymer to conditions sufficient to produce the α,ω-hydroxyl-telechelic polymer. The produced telechelic composition can have a functionality of 1.7 to 2.00, preferably above 1.95. Step (ii) can include subjecting the telechelic polyolefin-based polymer to a hydroboration-oxidation process to produce the α,ω-hydroxyl-telechelic polyolefin-based polymer. In some aspects, the hydroboration-oxidation process can include contacting the telechelic polyolefin-based polymer with 9-borobicyclo[3.3.1]nonane (9-BBN) and toluene solution at 70 °C to 90 °C to produce a hydroborated telechelic polyolefin-based polymer intermediate. In other aspects, the hydroboration-oxidation process can include contacting the telechelic polyolefin-based polymer with borane dimethyl sulfide (BH₃-SMe₂) toluene solution at 50 °C to 70 °C to produce a hydroborated telechelic polyolefin-based polymer intermediate. The hydroborated telechelic polyolefin-based polymer intermediate can be contacted with an oxidizing agent at 25 °C to 130 °C to produce the α,ω-hydroxyl-telechelic polyolefin-based polymer of the present invention.

Other embodiments of the invention are discussed throughout this application. Any embodiment discussed with respect to one aspect of the invention applies to other aspects of the invention as well and vice versa. Each embodiment described herein is understood to be embodiments of the invention that are applicable to other aspects of the invention. It is contemplated that any embodiment or aspect discussed herein can be combined with other embodiments or aspects discussed herein and/or implemented with respect to any method or composition of the invention, and vice versa. Furthermore, compositions of the invention can be used to achieve methods of the invention.

The following includes definitions of various terms and phrases used throughout this specification.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The term "branching" refers the regular or random attachment of side chains to a polymer's backbone chain.

The term "degree of branching (DB)" of a group/oligomer/polymer refers to % of branched carbons in the backbone of the group/oligomer/polymer. For example, the following group having the formula of Formula (A), has a degree of branching of 20% to 30 %. The branched carbons in the backbone of the group of Formula A is marked with a *. R' in Formula A is a branching group, can be an alkyl group, and y is an integer and denotes number of repeat units. Degree of branching can be determined using known polymer analysis methods, for example proton and carbon nuclear magnetic resonance spectroscopy.

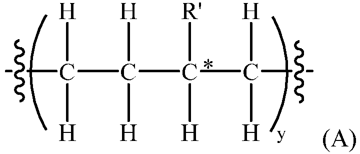

The term "linear hydrocarbon" refers to a hydrocarbon having a continuous carbon chain without side chain branching. The continuous carbon chain may be optionally substituted. The optional substitution can include replacement of at least one hydrogen atom with a functional group, such as hydroxyl, acid, amine, or halogen group; and/or replacement of at least one carbon atom with a heteroatom.

The term "branched hydrocarbon" refers to a hydrocarbon having a linear carbon chain containing branches, such as substituted and/or unsubstituted hydrocarbyl branches, bonded to the linear carbon chain. Optionally, the linear carbon chain can contain additional substitution. Optional additional substitutions can include replacement of at least one carbon atom in the linear carbon chain with a heteroatom and/or replacement of at least one hydrogen atom directly bonded to a carbon atom of the linear chain with a functional group, such hydroxyl, acid, amine, or halogen group.

The terms "wt.%", "vol.%", or "mol.%" refers to a weight percentage of a component, a volume percentage of a component, or molar percentage of a component, respectively, based on the total weight, the total volume of material, or total moles, which includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The processes of the present invention can "comprise," "consist essentially of," or "consist of" particular ingredients, components, compositions, *etc.* disclosed throughout the specification. With respect to the transitional phrase "consisting essentially of," in one non-limiting aspect, a basic and novel characteristic of the processes of the present invention are their abilities to produce hydroxyl telechelic compositions (e.g., polymers and oligomers).

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings.
**FIG. 1** depicts the ¹H NMR spectra for purified di-undeceneyl magnesium of the present invention.
**FIG. 2** depicts the ¹H NMR of the divinyl-polymer of the present invention with a functionality of 1.81.
**FIG. 3** depicts the Gel Permeation Chromatogram (GPC) at 150 °C for the divinyl-polymer of the present invention with a functionality of 1.81.
**FIG. 4** depicts the differential scanning calorimetry (DSC) thermograph at 10 °C/min at for the divinyl-polymer of the present invention with a functionality of 1.81.
**FIG. 5** depicts the ¹H NMR of the iodovinyl-polymer of the present invention with a functionality of 1.81.
**FIG. 6** depicts the ¹H NMR of the divinyl-polymer of the present invention with a functionality of 1.98.
**FIG. 7** depicts the Gel Permeation Chromatogram at 150 °C for the divinyl-polymer of the present invention with a functionality of 1.98.
**FIG. 8** depicts the differential scanning calorimetry (DSC) thermograph at 10 °C/min at for the divinyl-polymer of the present invention with a functionality of 1.98.
**FIG. 9** depicts the ¹H NMR of the hydroxyl-telechelic polyolefin-based polymer of the present invention using 9-BBN as the hydroborating agent.
**FIG. 10** depicts the ¹H NMR of the hydroxyl-telechelic polyolefin-based polymer of the present invention (functionality 1.78) using BH₃-SMe₂ as the hydroborating agent.
**FIG. 11** depicts the Gel Permeation Chromatogram at 150 °C for the hydroxyl telechelic polyolefin-based polymer of the present invention with a functionality of 1.78.
**FIG. 12** depicts the differential scanning calorimetry (DSC) thermograph at 10 °C/min at for the hydroxyl telechelic polyolefin-based polymer of the present invention with a functionality of 1.78.

While the invention is susceptible to various modifications and alternative forms, specific embodiments thereof are shown by way of example in the drawings. The drawings may not be to scale.

### DETAILED DESCRIPTION OF THE INVENTION

A solution to at least one of the problems associated with processes to produce hydroxyl telechelic polyolefin-based polymers has been discovered. The telechelic oligomer or polymer can possess an average of 1.7 to 2, preferably 2 chain-end functionalities per molecule. An α,ω-difunctionalized polymer of this type can be used to construct, and confer polyolefin-like properties (e.g., melt temperature), to a polyester polymer. Recovery of the α,ω-difunctionalized building block following use of the polyester polymer may increase chemical recycling efficiency when compared with current polyolefin polymers. In one aspect, it was found that α,ω-divinyl polymers containing at least 39 methylene units and α,ω-dihydroxy polymers containing at least 43 methylene units could be prepared with a high degree of functionality while possessing polyolefin-like properties.

These and other non-limiting aspects of the present invention are discussed in further detail in the following sections.

### A. Telechelic Polyolefin based Polymers

Although polymer is used throughout the specification, oligomers are also considered. Thus, "polymer" and "oligomer" can be used interchangeably. One aspect of the present invention is directed to a telechelic polyolefin-based polymer of Formula I:

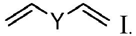

In Formula I, Y can be an aliphatic group, preferably an aliphatic hydrocarbon group. Y can have 39 to 996 carbon atoms. For example, 39, 40, 45, 50, 55, 60, 65, 70, 75, 80, 85, 90, 95, 100, 150, 200, 250, 300, 350, 400, 450, 500, 550, 600, 650, 700, 750, 800, 850, 900, 950, 960, 980, 990, 991, 992, 993, 994, 995, 996, or any range or value therein. Y can have a degree of saturation of 97 to 100%. For example, the degree of saturation can be 97%, 98%, 99%, 100% or any value or range there between. In some aspects, Y can contain at least 39 carbon atoms, and can have a degree of saturation of 97 to 100%, such as 98 to 100%. In some aspects, Y can contain 39 to 996 carbon atoms, such as 50 to 800 carbon atoms, such as 60 to 600 carbon atoms, preferably 100 to 700 carbon atoms. In some aspects, Y can have a degree of branching (DB) of 0 to 10%, 0 to 9%, 0 to 7%, or 0%, 1%, 2%, 3%, 4%, 5%, 6%, 7%, 8%, 9%, 10% or any range or value there between.

In some aspects, Y can be a linear hydrocarbon. In some aspects, Y can be a branched hydrocarbon having a DB of 0.01% to 10%, 0.01% to 9%, 0.01% to 7%, or 0.01%, 0.05%, 0.1%, 1%, 2%, 3%, 4%, 5%, 6%, 7%, 8%, 9%, or 10% or any range or value there between.

In some aspects, Y can be a polyolefin group. A polyolefin group can be a polyolefin with one H missing at each of the two ends of the polyolefin backbone chain, where the valency of the terminal carbons are satisfied by bonding with the vinyl groups at the two sides of Y. In some aspects, Y can be a linear polyolefin group. In some aspects, Y can be a branched polyolefin-based group, having a DB of 0.01 to 10%, 0.01 to 9%, 0.01 to 7%, or 0.01%, 0.05%, 0.1%, 1%, 2%, 3%, 4%, 5%, 6%, 7%, 8%, 9%, or 10% or any range or value there between. In some aspects, Y can contain 1 to 10 (C1 to C10) hydrocarbon branches. In some aspects, the polyolefin-based group can be a polyethylene-based group, a poly(ethylene-propylene)-based group, or a poly(ethylene-*co*-α-olefin)-based group. Non-limiting examples of a poly(ethylene-*co*-α-olefin)-based group include poly(ethylene-co-1-butene), poly(ethylene-co-1-hexene), or poly(ethylene-*co*-1-octene) groups. In some aspects, Y can be a linear polyethylene-based group. In some aspects, Y can be a branched polyethylene-based group containing C1 to C10 alkyl group branches, and a DB of 0.01 to 20%, 1% to 15%, 5% to 10%, or 0.01%, 0.05%, 0.1%, 1%, 2%, 3%, 4%, 5%, 6%, 7%, 8%, 9%, 10%, 11%, 12%, 13%, 14%, 15%, 16%, 17%, 18%, 19%, or 20%, or any range or value there between.

Polymers of Formula I can have a melt temperature of 40 °C or over. In some aspects, the polymer can have a melt temperature (Tₘ) of 40 °C to 170 °C, 85 °C to 165 °C, 120 °C to 150 °C, or 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, 135 °C, 140 °C, 145 °C, 150 °C, 155 °C, 160 °C, 165 °C, or 170 °C, or any range or value there between. Tₘ can be determined using known chemical testing methods. For example, Tₘ can be measured according to ISO-11357-1 using DSC at a heating rate of 10 °C per minute. In some aspects, the number average molecular weight of the polymer can be 500 to 20,000 g/mol, 1,000 to 7,000 g/mol, or 500 g/mol, 1000 g/mol, 2500 g/mol, 5000 g/mol, 7500 g/mol, 10,000 g/mol, 12,500 g/mol, 15,000 g/mol, 17,500 g/mol, or 20,000 g/mol, or any value or range there between. Number average molecular weight (*M*ₙ) can be determined by ISO 16014-4 and ASTM D6474 methods at 150 °C. In some aspects, α,ω-divinyl polymers of Formula I can have a polydispersity index (PDI) of 1.5 to 16, 1.5 to 4, 1.5 to 3, or 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, or any value or range there between. PDI can be determined by known polymer testing methods. In a preferred aspect, PDIs of compositions described throughout the specification are determined using high temperature size exclusion chromatography (HT-SEC). For example, using ISO 16014-4 and ASTM D6474 methods at 150 °C to 160 °C.

In some aspects, polymers of Formula I can have an average of 1.70 to 2.00 vinyl substituents (e.g., functionality) per chain, 1.90 to 2.00 vinyl substituents per chain, 1.95 to 2.00 vinyl substituents per chain, or 1.7, 1.75, 1.8, 1.85, 1.9, 1.95, 1.96, 1.97, 1.98, 1.99 or 2.0 or any value or range there between. The unfunctionalized chain ends can be methyl groups. For example, a sample of Formula I featuring 1.95 vinyl substituents per chain can include 95% to 97.5% (e.g., 95%, 95.5%, 96%, 96.5%, 97% or 97.5% or any value or range there between) of α,ω-divinyl polymers, 0% to 5% (e.g., 0%, 1%, 2%, 3%, 4%, or 5% or any value or range there between) polymers that include one vinyl and methyl termination, and 0% to 2.5 % (0%, 1%, 1.5%, 2%, or 2.5% or any value or range there between) of polymers that are terminated with two methyl substituents.

Another aspect of the present invention is directed to a polymer of Formula II:

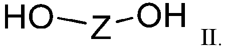

In Formula II, Z can be an aliphatic group, preferably an aliphatic hydrocarbon group. Z can have 43 to 1000 carbon atoms, 50 to 800 carbon atoms, 60 to 600 carbon atoms, 100 to 700 carbon atoms or 43, 50, 100, 150, 200, 250, 300, 350, 400, 450, 500, 550, 600, 650, 700, 750, 800, 850, 900, 950, 1000, or any value or range therebetween. Z can have a degree of saturation of 97 to 100%. For example, the degree of saturation can be 97%, 98%, 99%, 100% or any value or range there between. In some aspects, Z can have a DB of 0 to 10%, 0 to 9%, 0 to 7%, or 0%, 1%, 2%, 3%, 4%, 5%, 6%, 7%, 8%, 9%, 10% or any range or value there between. In some aspects, Z can contain at least 43 carbon atoms to 1000, and can have a degree of saturation of 97 to 100%.

In some aspects, Z can be a linear hydrocarbon. In some aspects, Z can be a branched hydrocarbon having a DB of 0.01% to 20%, 1% to 15%, 5% to 12%, or 0.01%, 0.05%, 0.1%, 1%, 2%, 3%, 4%, 5%, 6%, 7%, 8%, 9%, 10%, 11%, 12%, 13%, 14%, 15%, 16%, 17%, 18%, 19%, or 20%, or any range or value there between.

In some aspects, Z can be a polyolefin group. A polyolefin group can be a polyolefin-based group with one H missing at each of the two ends of the polyolefin backbone chain, where the valency of the terminal carbons are satisfied by bonding with the hydroxyl groups at the two sides of Z. In some aspects, Z can be a branched polyolefin group, having a DB of 0.01 to 10%, 0.01 to 9%, 0.01 to 7%, or 0.01%, 0.05%, 0.1%, 1%, 2%, 3%, 4%, 5%, 6%, 7%, 8%, 9%, or 10% or any range or value there between. In some aspects, Z can contain 1 to 10 (C1 to C10) hydrocarbon branches. In some aspects, the polyolefin-based group can be a polyethylene-based, poly(ethylene-propylene)-based, or poly(ethylene-*co*-α-olefin)-based group. Non-limiting examples of poly(ethylene-*co*-α-olefin)-based groups include poly(ethylene-*co*-1-butene), poly(ethylene-*co*-1-hexene), or poly(ethylene-*co*-1-octene) groups. In some aspects, Z can be a linear polyethylene-based group. In some aspects, Z can be a branched polyethylene-based group containing C1 to C10 alkyl group branches, and a DB of 0.01 to 10%, 0.01 to 9%, 0.01 to 7%, or 0.01%, 0.05%, 0.1%, 1%, 2%, 3%, 4%, 5%, 6%, 7%, 8%, 9%, or 10% or any range or value there between.

Polymers of Formula II can have a melt temperature of 40 °C or over. In some aspects, the polymer can have a melt temperature (Tₘ) of 40 °C to 170 °C, 85 °C to 165 °C, 120 °C to 150 °C, or 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, 130 °C, 135 °C, 140 °C, 145 °C, 150 °C, 155 °C, 160 °C, 165 °C, or 170 °C, or any range or value there between. Tₘ can be determined using known chemical testing methods. For example, Tₘ can be measured according to ISO-11357-1 using DSC at a heating rate of 10 °C per minute. In some aspects, the number average molecular weight of the polymer can be 500 to 20,000 g/mol, 1,000 to 7,000 g/mol, or 500 g/mol, 1000 g/mol, 2500 g/mol, 5000 g/mol, 7500 g/mol, 10,000 g/mol, 12,500 g/mol, 15,000 g/mol, 17,500 g/mol, or 20,000 g/mol, or any value or range there between. Number average molecular weight (*M*ₙ) can be determined by ISO 16014-4 and ASTM D6474 methods at 150 °C. In some aspects, α,ω-divinyl polymers of Formula I can have a polydispersity index (PDI) of 1.5 to 16, 1.5 to 4, 1.5 to 3, or 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, or any value or range there between. PDI can be determined by known polymer testing methods. In a preferred aspect, PDIs of compositions described throughout the specification are determined using high temperature size exclusion chromatography (HT-SEC). For example, using ISO 16014-4 and ASTM D6474 methods at 150 °C to 160 °C.

In some aspects, polymers of Formula II can have an average of 1.70 to 2.00 hydroxyl substituents (e.g. functionality) per chain, 1.75 to 2.00 hydroxyl substituents per chain, 1.95 to 2.00 hydroxyl substituents per chain, or 1.75, 1.8, 1.85, 1.9, 1.91, 1.92, 1.93, 1.94, 1.95, 1.96, 1.97, 1.98, 1.99, or 2.0 or any range or value there between. Unfunctionalized chain ends can be methyl groups. For example, a sample of Formula II featuring 1.95 hydroxyl substituents per chain can include 95% to 97.5% (e.g., 95%, 95.5%, 96%, 96.5%, 97%, or 97.5% or any range or value there between) of α,ω-dihydroxyl polymers, 0% to 5% (e.g., 0%, 1%, 2%, 3%, 4%, or 5%, or any value or range there between) of polymers that include one hydroxyl and a methyl termination, and 0% to 2.5% (e.g., 0%, 1%, 1.5%, 2%, or 2.5% or any value or range there between) of polymers that are terminated with two methyl substituents.

### B. Process for Production of Chemical Compounds

Certain aspects are directed to processes for producing polymers of Formula I. As shown in Scheme I, the method can include using a chain transfer polymerization catalyst (e.g., a neodymium chain transfer catalyst) to extend the carbon chains of vinyl-terminated dialkyl magnesium reagents under olefin (e.g., ethylene) pressure. The carbon chain extended dialkyl magnesium reagents can be treated with molecular iodine to prepare α-iodo-ω-vinyl polyethylenes. The α-iodo-ω-vinyl polyethylenes can be treated with an excess of potassium *tert*-butoxide to form α,ω-divinyl polyethylenes.

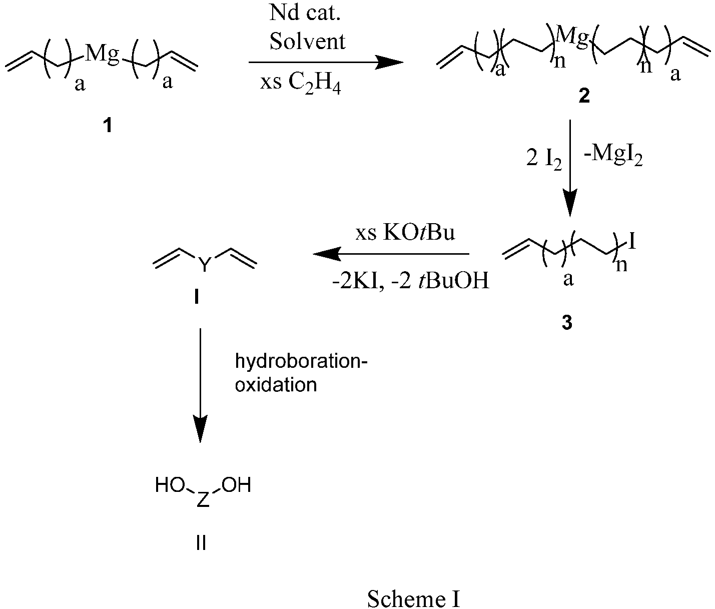

Referring to Scheme I, step one of the process can include contacting di-olefinic magnesium composition (1) with an olefin monomer in the presence of a polymerization catalyst to produce vinyl telechelic polyolefin-based magnesium intermediate (2) where a is 8 to 20 (e.g., 8, 9, 10, 11, 12, 13, 14, 15, 16, 17, 18, 19, or 20 or any value or range there between) and n is the number of olefin repeating units, and has a value of 25 to 495, 35 to 350, or 25, 50, 75, 100, 125, 150, 175, 200, 225, 250, 275, 300, 325, or 350 or any value or range there between. Di-olefinic magnesium composition (1) can have 16 to 40 carbon atoms or 16, 17, 18, 19, 20, 21, 22, 23, 24, 25, 26, 27, 28, 29, 30, 31, 32, 33, 34, 35, 36, 37, 38, 39, or 40, or any range or value there between (e.g., *a* can be 8 to 20). The polymerization catalyst can be a neodymium-based catalyst. A non-limiting example of a neodymium-based catalyst is (C₅Me₅)₂NdCl₂Li(OEt₂)₂. Neodymium-based catalysts are commercially available. The olefin monomer can be ethylene. Contacting conditions in the first step can include temperature and pressure. Non-limiting examples of a temperature include 25 °C to 130 °C, or 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 105 °C, 110 °C, 115 °C, 120 °C, 125 °C, or 130 °C, or any value or range there between. Non-limiting examples of pressure include 0.1 MPa, 0.2 MPa to 0.9 MPa or 0.2 MPa, 0.25 MPa, 0.3 MPa, 0.35 MPa, 0.4 MPa, 0.5 MPa, 0.6 MPa, 0.7 MPa, 0.8 MPa, 0.9 MPa, or any range or value there between, preferably 0.2 MPa to 0.9 MPa. The solvent can be a non-polar solvent. Non-limiting examples of nonpolar solvents include toluene, benzene, hexane, dibutyl ether, other hydrocarbon solvents and or mixtures thereof. In a preferred aspect, the nonpolar solvent is toluene. An amount of polymerization catalyst can be 1.5 mol% to 3.0 mol% or 1.5 mol%, 2 mol%, 2.5 mol%, or 3 mol% or any value or range there between relative to dialkyl magnesium reagent.

In some aspects, the di-olefinic magnesium composition (1) can be prepared and isolated prior to step one. For example, a terminally halogenated-1-olefin (e.g., terminally brominated-1-olefin or a terminally chlorinated-1-olefin) can be reacted for a desired amount of time (e.g., 0.5 to 3 hours, or 0.5, 1, 2, or 3 hours, or any range or value there between) with magnesium source in a polar aprotic solvent (e.g., diethyl ether) to produce a terminal magnesium bromide-1-olefin composition. Reaction conditions can include a temperature of 0 °C to 25 °C, or 0 °C, 5 °C, 10 °C, 15 °C, 20 °C, 25 °C at atmospheric pressure. The terminally halogenated-1-olefin can have 8 to 20 carbon atoms, or 8, 9, 10, 11, 12, 13, 14, 15, 16, 17, 18, 19, or 20, or any range or value there between. A non-limiting example of a terminally halogenated-1-olefin is 11-bromo-1-undecene. The polar aprotic solvent can have a low boiling point (e.g., less than 50 °C, or between 25 °C and 40 °C at atmospheric pressure). Use of the low boiling point can facilitate removal of the solvent to produce a crude terminal magnesium bromide-1-olefin composition. The crude solution can be filtered to remove magnesium salts. In some aspects, the low boiling solvent can be removed to produce the crude terminal magnesium bromide-1-olefin. Dioxane can be added to the crude solution to produce the di-olefinic magnesium composition as a precipitate. The di-olefinic magnesium can be isolated by filtration or removal of the solvent.

In some aspects, the di-olefinic magnesium can be purified prior to use. The di-olefinic magnesium composition can suspended or redissolved in a low boiling hydrocarbon solvent (e.g., less than 50 °C, or between 25 °C and 40 °C) at atmospheric pressure to produce a di-olefinic magnesium/solvent solution. The di-olefinic magnesium/solvent solution can be filtered through a filter aid (e.g., Celite) to remove impurities (e.g., magnesium bromide salts). Removal the solvent (e.g., evaporation or reduced pressure) provides a purified terminal di-olefinic magnesium composition. Notably, the use of purified terminal di-olefinic magnesium composition can allow for the formation of α,ω-divinyl polyethylenes that feature a high number of vinyl groups per polymer chain.

Referring back to Scheme I, step two can include reacting vinyl telechelic polyolefin-based magnesium intermediate (2) with iodine (I₂) in a nonpolar solvent (e.g., toluene) for a desired amount of time (e.g., 0.1 to 5 days, or 0.1, 1, 2, 3, 4, or 5 or any range or value there between) can produce iodovinyl polyolefin-based intermediate (3). The reaction conditions can include a temperature of 20 °C to 30 °C, or 20 °C, 21 °C, 22 °C, 23 °C, 24 °C, 25 °C, 26 °C, 27 °C, 28 °C, 29 °C, or 30 °C, or any value or range there between. The iodine to magnesium molar ratio can range from to 2 to 2.5, or 2, 2.1, 2.2, 2.3, 2.4, or 2.5 or any value or range there between. After the desired amount of time, the crude iodovinyl polyolefin-based intermediate solution can be contacted with an antisolvent (e.g., an alcohol such as methanol) to precipitate iodovinyl polyolefin-based intermediate (3) from the solution. The iodovinyl polyolefin-based intermediate (3) can be isolated using standard separation techniques (e.g., filtration, centrifugation, and the like), washed with additional antisolvent (e.g., alcohol), and dried under vacuum. Allowing molecular iodine to react with vinyl telechelic polyolefin-based magnesium intermediate for an extended time period at or near ambient temperature can allow for optimal conversion to the corresponding α-iodo-ω-vinyl polyethylenes and minimize undesired protonation during an alcohol workup. This optimization can allow for the formation of α,ω-divinyl polyethylenes that have a high number of vinyl groups per polymer chain.

In step 3, iodovinyl polyolefin-based intermediate (3) can be subjected to conditions suitable to produce Formula II hydroxyl-telechelic polyolefin-based polymers. The conditions can include a deiodination followed by hydroboration-oxidation. In the deiodination reaction, iodovinyl polyolefin-based intermediate (3) can be dissolved in an aprotic polar solvent (e.g., tetrahydrofuran) containing base (e.g., alkoxide, preferably potassium *tert*-butoxide) and agitated for a desired amount of time (e.g., 10 to 20 hours, or 10, 11, 12, 13, 14, 15, 16, 17, 18, 19 or 20 hours, or any range or value there between) to produce Formula II vinyl-telechelic polyolefin-based polymers. A reaction temperature can range from 20 °C to 110 °C, or 20 °C, 25 °C, 30 °C, 35 °C, 40 °C, 45 °C, 50 °C, 55 °C, 60 °C, 65 °C, 70 °C, 75 °C, 80 °C, 85 °C, 90 °C, 95 °C, 100 °C, 105 °C, or 110 °C or any value or range there between.

Hydroboration-oxidation of Formula I polymers can include adding excess borane reagent to a solution of Formula I polymers dissolved in a nonpolar solvent (e.g., THF, toluene, and the like) to form a α,ω-diboryl polymer/solvent solution (e.g., hydroborated telechelic polyolefin-based polymer intermediate/solvent solution). Non-limiting examples of borating agents can include 9-borobicyclo[3.3.1]nonane (9-BBN) and borane dimethyl sulfide (BH₃-SMe₂). When 9-BBN is used reaction conditions can include temperatures from 70 °C to 90 °C, or 70 °C, 75 °C, 80 °C, 85 °C, or 90 °C, or any range or value there between. When BH₃-SMe₂ is used the reaction temperatures can range from 50 °C to 70 °C, or 50 °C, 55 °C, 60 °C, 65 °C, or 70 °C, or any value or range there between under inert atmosphere. The α,ω-diboryl polymer/solvent solution can be contacted with base (e.g., 10% sodium hydroxide (NaOH) solution) followed by an oxidizing agent (50% H₂O₂ solution) at 0°C to 5 °C, and then heated to a temperature of 25 °C to 130 °C to produce the α,ω-hydroxyl-telechelic polyolefin-based polymer of Formula II. Non-limiting examples of reaction temperatures can include 25 °C, 30 °C, 40 °C, 50 °C, 60 °C, 70 °C, 80 °C, 90 °C, 110 °C, 115 °C, 120 °C, 125 °C, or 130 °C, or any range or value there between. Reaction times can include 0.5 to 15 hours, or 0.5, 1, 5, 10, or 15 hours or any value or range there between. The solution can be cooled and an anti-solvent (e.g., an alcohol, preferably methanol) can be added to precipitate the α,ω-hydroxyl-telechelic polyolefin-based polymer of Formula II from solution. The α,ω-hydroxyl-telechelic polyolefin-based polymer of Formula II can be collected using known chemistry methods (e.g., filtration, centrifugation, and the like), washed with the antisolvent and dried under vacuum. The hydroboration and oxidation reactions can be performed under inert atmosphere (e.g., nitrogen, argon, or the like).

In some aspects, polymers of Formula II can be prepared via hydroformylation catalysis. Starting with a polymer of Formula I, Y can have "m" methylene units between two vinyl substituents, hydroformylation and subsequent hydrogenation can yield polymers of Formula II having m+6 methylene units.The temperature, pressure, and gas hourly space velocity (GHSV) can be varied depending on the reaction to be performed and is within the skill of a person performing the reaction (*e.g.*, an engineer or chemist).

### EXAMPLES

The present invention will be described in greater detail by way of specific examples. The following examples are offered for illustrative purposes only and are not intended to limit the invention in any manner. Those of skill in the art will readily recognize a variety of noncritical parameters which can be changed or modified to yield essentially the same results.

### Example 1 (Isolation of Purified Di-undeceneyl Magnesium)

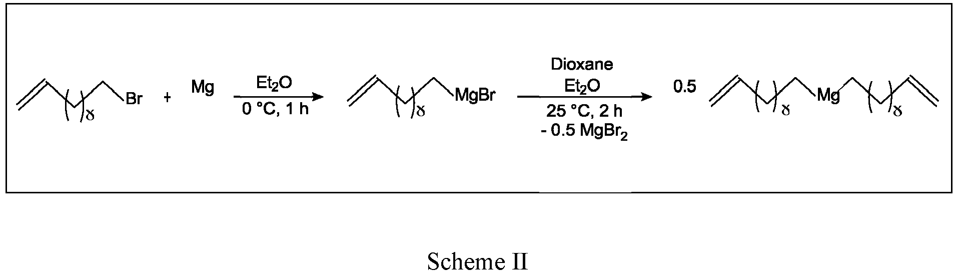

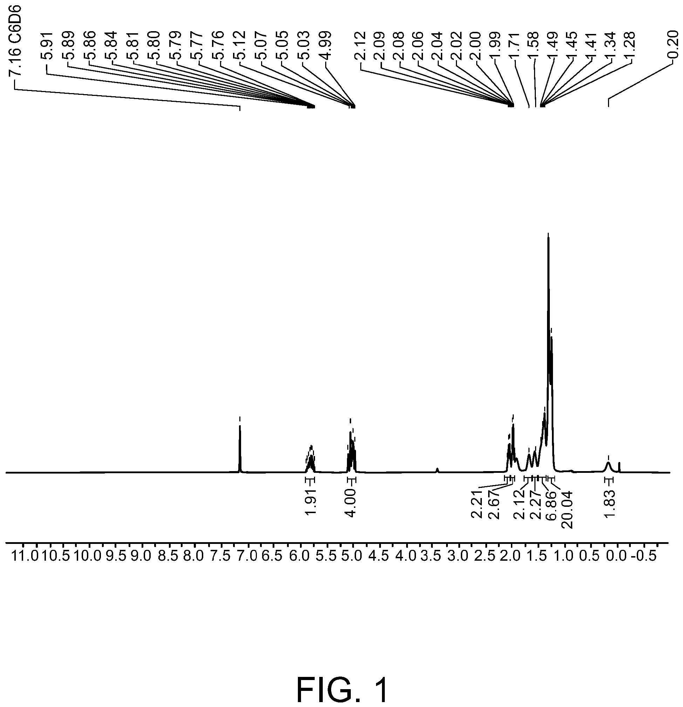

In an inert atmosphere glovebox, a suspension of 2 g (0.0823 mol) of magnesium in 100 mL of diethyl ether was prepared. A dilute solution of 5.5 mL (0.0412 mol) of 11-bromo-1-undecene in diethyl ether was added dropwise to a cold solution of magnesium in ether. This mixture was allowed to stir at 0 °C for 1 h. The solution was then filtered through a frit to remove any excess unreacted magnesium. To the filtered solution, 4.6 mL (0.054 mol) of dioxane was added dropwise, resulting in the formation of white precipitate that was allowed to stir for 2 h at ambient temperature. The solvent was then removed from the suspension under vacuum. The residual solid was re-dissolved in pentane to extract the product and then filtered through Celite. On removal of pentane under reduced pressure, di-undeceneyl magnesium was isolated as a waxy solid in (4.2 g, 0.013 mol) 54% yield. ¹H NMR (400 MHz, benzene-*d*₆): 5.81 (m, 2H, =CH), 5.05 (m, 4H, =C*H₂*), 2.09 (q, *J =* 8.1 Hz, 2H, C*H₂*)*,* 2.01 (q, *J =* 6.0 Hz, 2H, C*H₂*)*,* 1.71 (s, broad, 2H, C*H₂*)*,* 1.58 (s, broad, 2H, C*H₂*)*,* 1.43 (d, *J* = 16.1 Hz, 6H, C*H₂*)*,* 1.31 (d, *J* = 23.2 Hz, 20H, C*H₂*)*,* 0.20 (s, broad, 2H, C*H₂*Mg). FIG. 1 depicts the ¹H NMR spectra for purified di-undeceneyl magnesium.

### Example 2 (Synthesis of Divinyl PE with Functionality of 1.81)

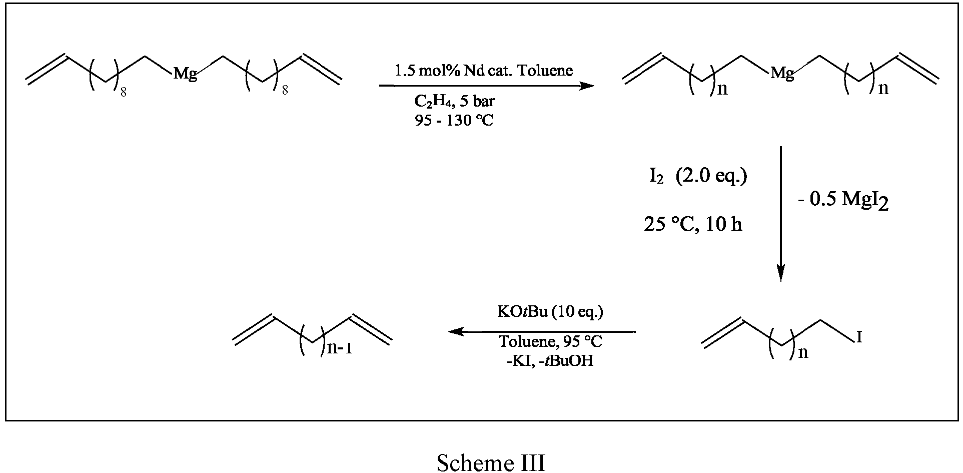

Referring to Scheme III a divinyl polyethylene-based telechelic polymer having a functionality of 1.81 was synthesized. In Scheme III, n represents the number of repeating units (e.g., CH₂). In an inert glovebox atmosphere, a Parr reactor was charged with 474 mg (1.44 mmol) of *in situ-* generated di-undeceneyl magnesium and 500 mL of toluene. To this suspension, 6 mg (0.0096 mmol) of (C₅Me₅)₂NdCl₂Li(OEt₂)₂ in 10 mL of toluene was added. The reactor was set at a temperature of 95 °C and charged with ethylene feed at a pressure of 5 bar (0.5 MPa)with continuous stirring. It was observed that the temperature increased from 95 to 130 °C upon the addition of ethylene gas, suggesting that polymerization was exothermic. Total consumption of 2 bar (0.2 MPa) of pressure was observed within 1 min. Ethylene addition was repeated and a total of 6 bar (0.6 MPa) of ethylene was consumed. Then, a solution of 254 mg (2.87 mmol) of iodine in THF was added dropwise to the product mixture under nitrogen atmosphere and was allowed to stir at room temperature for 10 hours. After 10 h, 200 mL methanol was added to the reaction mixture that led to the precipitation of a white solid. This white solid was filtered through a frit and washed with 3 x 100 mL methanol to rinse away the excess iodine and dried over vacuum. This procedure yielded 2 g of white solid identified as iodovinyl-polyethylene (PE).

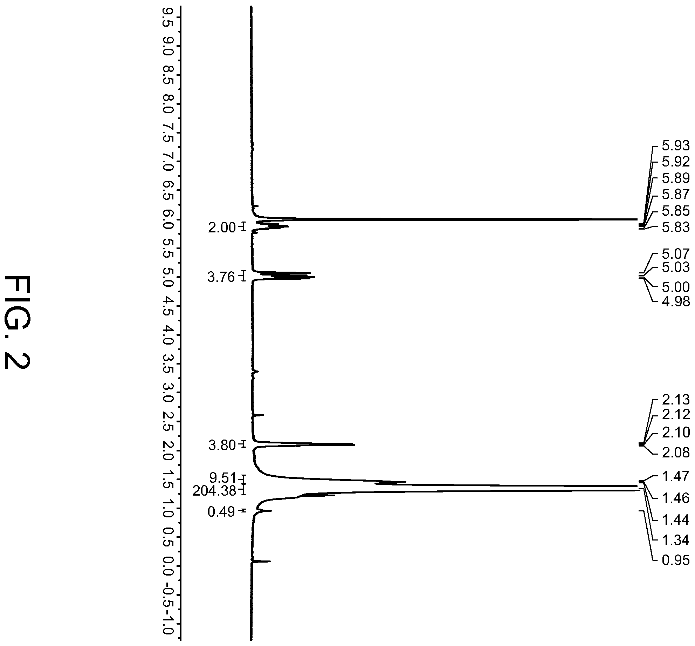

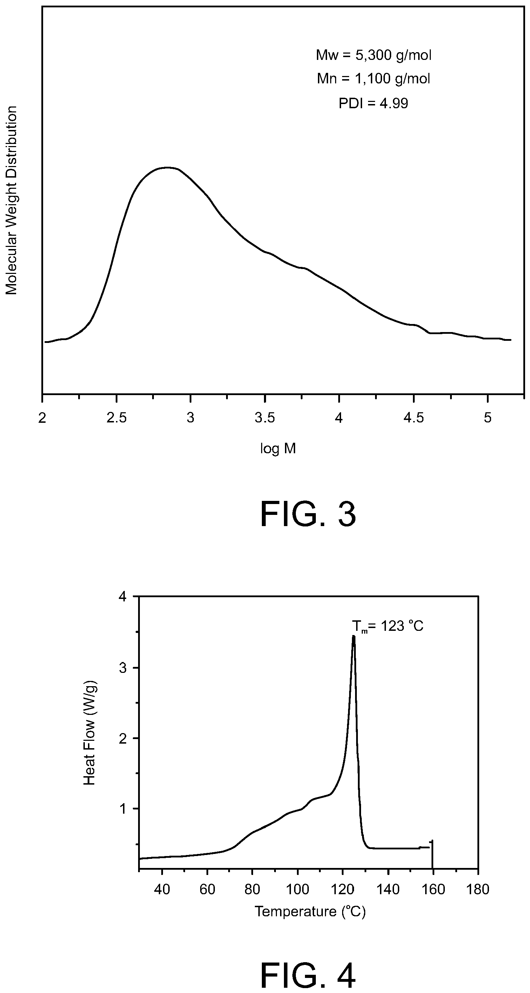

In an inert glovebox atmosphere, a 100 mL Schlenk bomb was charged with 300 mg (0.49 mmol) of iodovinyl-PE. To that, 15 mL of THF solution containing 546 mg (4.9 mmol) potassium tert- butoxide was added while stirring. This mixture was stirred at 95 °C for 12 h. After 12 h, the reaction was allowed to cool to room temperature, and 50 mL of methanol was added to precipitate the solid product. The mixture was then filtered through a frit and washed with 3 x 20 mL methanol and allowed to dry over vacuum. The white solid was identified to be divinyl-PE, and ¹H NMR analysis revealed vinyl end group functionality of 1.81 based on integration of the vinyl group and neighboring methylene against the chain-end methyl resonance (FIG. 2). ¹H NMR (400 MHz, TCE-*d*₂, 120 °C): 5.88 (td, *J =* 16.8, 6.4 Hz, 2H, C*H*=), 5.02 (dd, *J =* 23.8, 13.6 Hz, 4H, =C*H₂*), 2.11 (q, *J =* 6.8 Hz, 4H, C*H₂*)*,* 1.50 (m, 10H, C*H₂*)*,* 1.34 (s, 204H, C*H*₂). GPC (TCB, 150 °C): Mₙ = 1,100 g/mol, M_{w} = 5,300 g/mol, D = 4.99 (FIG. 3). Tₘ = 123 °C (FIG. 4). Gel permeation chromatography molecular weight determination: High Temperature Size Exclusion Chromatography (HT-SEC) analysis of the polymer samples were performed using a GPC-IR^{®} (Polymer Char, Spain) instrument equipped with an autosampler, an Agilent 1260 Infinity II pump and degasser, an Infrared detector (Polymer Char IR6), and a 4-capillary bridge viscometer. The mobile phase used was 1,2,4-trichlorobenzene (TCB) (Fischer Scientific-HPLC Grade) which was stabilized with 300 ppm of butylated hydroxytoluene (BHT). Polymer separation was performed using a flow rate of 1 mL/min through four (4) Agilent Technologies columns in the following order: 1 x PLgel Olexis Guard column (PL1110-1400, 50 x 7.5 mm) and 3 x PLgel Olexis column (PL1110-6400, 300 x 7.5 mm). The GPC/SEC Polystyrene Kit (Polymer Char PMCP-0321-182) was used to create the calibration curve from a series of polystyrene (PS) narrow standards. The column ovens (main and top), IR6 detector cell, and all autosampler temperatures were set to 160 °C. Samples were prepared in 10 mL high-temperature sample vials with aluminum caps and PTFE septums. Vials were loaded with ~8 mg of sample and 8 mL of solvent was injected at ambient temperature in each vial. The samples were dissolved by spinning the vials at 160 °C for 60 min. The final concentration pushed in the injection loop (200 µL), after accounting for solvent expansion, was ~0.9 mg/mL. Run times for all standards and samples was ~90 min. GPC One software (Polymer Char) was used for data processing. The molecular-mass distribution and MW averages were reported using both the Universal calibration and Mark-Houwink calibration curves. For Universal calibration an inline bridge viscometer was used; for Mark-Houwink calibration the MH constants used for polystyrene are K = 12.1 x 10-5 dL/g and Alpha = 0.707; and for polyethylene are K = 19.0 x 10-5 dL/g and Alpha = 0.725.

### Example 3 (Synthesis of Divinyl PE with Functionality of 1.98)

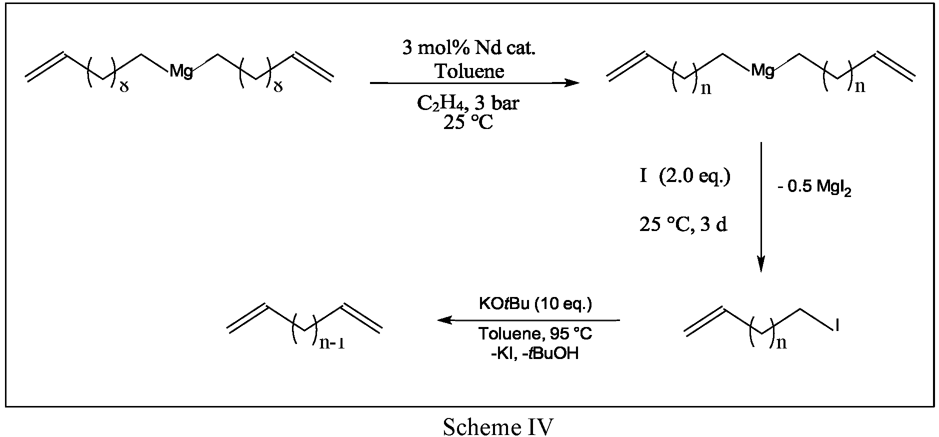

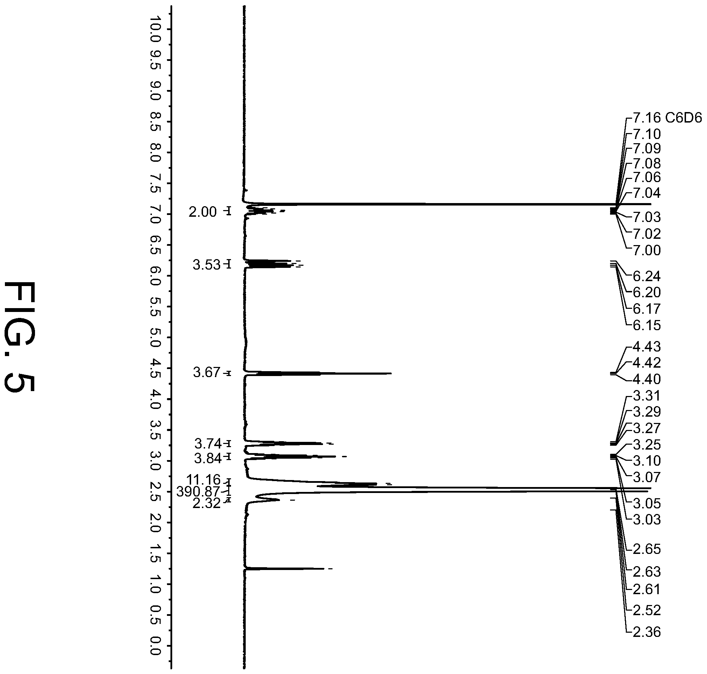

Referring to Scheme IV a divinyl polyethylene-based telechelic polymer having a functionality of 1.98 was synthesized. In Scheme IV, n represents the number of repeating units (e.g., CH₂). In an inert glovebox atmosphere, a Parr reactor was charged with 1.91 g (5.78 mmol) of diundeceneyl magnesium and 500 mL of toluene. To this suspension, 98 mg (0.17 mmol) of (C₅Me₅)₂NdCl₂Li(OEt₂)₂ in 10 mL of toluene was added. The reactor was charged with ethylene at a pressure of 3 bar (0.3 MPa) at room temperature with continuous stirring. Total consumption of 3 bar (0.3 MPa) of was observed within 5 min. This cycle was repeated 9 times and a total of 27 bar (2.7 MPa) of ethylene was consumed. After ethylene addition, a solution of 3 g (11.9 mmol) iodine in THF was added dropwise to the product mixture under inert glovebox atmosphere and was allowed to stir at room temperature for 3 days. After 3 days of stirring, 200 mL methanol was added to the reaction mixture that led to the precipitation of a white solid. This white solid was filtered through a frit and washed with 3 x 100 mL methanol to rinse away the excess iodine and dried over vacuum. This procedure yielded 7.13 g of white solid identified as iodovinyl-PE by ¹H NMR spectroscopy (FIG. 5). ¹H NMR (400 MHz, TCE-*d*₂, 120 °C): 7.05 (m, 2H, -CH=), 6.20 (m, 4H, =C*H₂*), 4.41 (*t, J* = 7.1 Hz, 4H, -C*H*₂), 3.28 (q, *J* = 7.8 Hz, 4H, -C*H*₂), 3.07 (*p, J* = 7.1 Hz, 4H, -C*H*₂), 2.71 - 2.60 (m, 11H), 2.52 (s, 391H, -C*H*₂), 2.36 (s, 2H, -C*H*₂). F = 0.99 (iodo functionality).

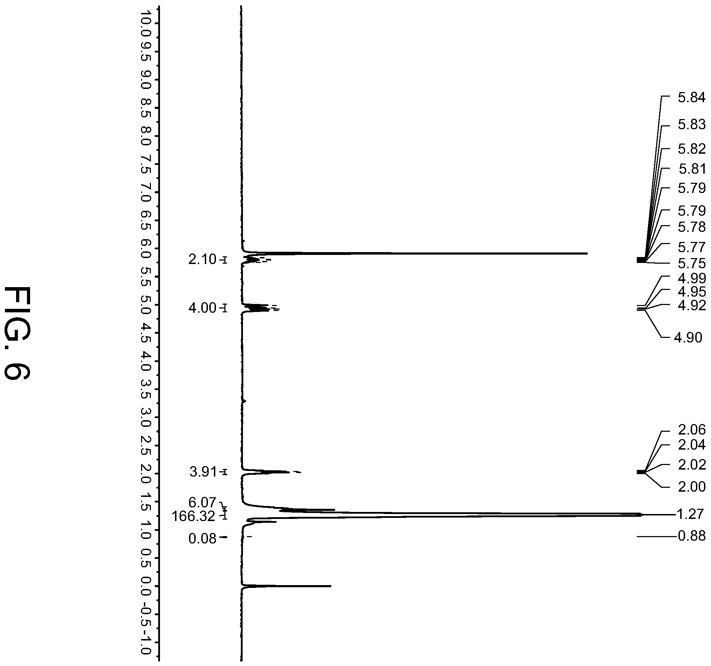

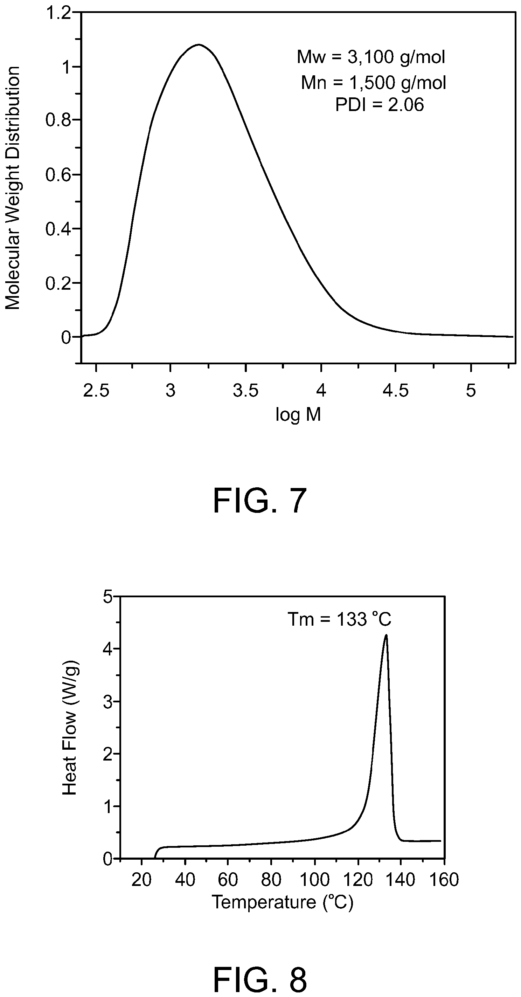

In an inert glovebox atmosphere, a 100 mL Schlenk bomb was charged with 1.3 g (0.98 mmol) of iodovinyl-PE. To that, 15 mL of toluene solution containing 546 mg (9.8 mmol) of potassium tert- butoxide was added, while stirring. This mixture was stirred at 95 °C for 12 h. After 12 h the reaction was allowed to cool to room temperature and 50 mL of methanol was added to precipitate the solid product. The mixture was then filtered through a frit and washed with 3 x 20 mL methanol and allowed to dry over vacuum. The white solid was identified to be divinyl-PE, and ¹H NMR analysis revealed vinyl end group functionality of 1.98 based on integration of the vinyl group and neighboring methylene against the chain-end methyl resonance (FIG. 6). ¹H NMR (400 MHz, TCE-*d*₂, 120 °C): 5.79 (m, 2H, C*H*=), 4.94 (m, 4H, =C*H₂*), 2.03 (q, *J =* 7.3 Hz, 4H, C*H₂*)*,* 1.37 (d, *J =* 10.7 Hz, 6H, C*H₂*)*,* 1.27 (s, 166H, C*H*₂). F = 1.98 (vinyl functionality). GPC (TCB, 150 °C): Mₙ = 1,500 g/mol, M_{w} = 3,100 g/mol, D = 2.06 (FIG. 7). Tₘ = 133 °C (FIG. 8).

### Example 4 (Synthesis of Hydroxyl-telechelic Polyolefin-based Polymer using 9-BBN)

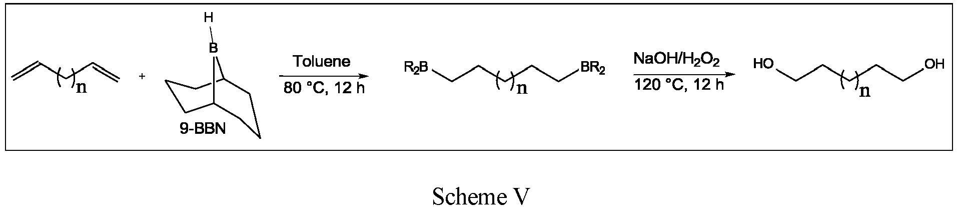

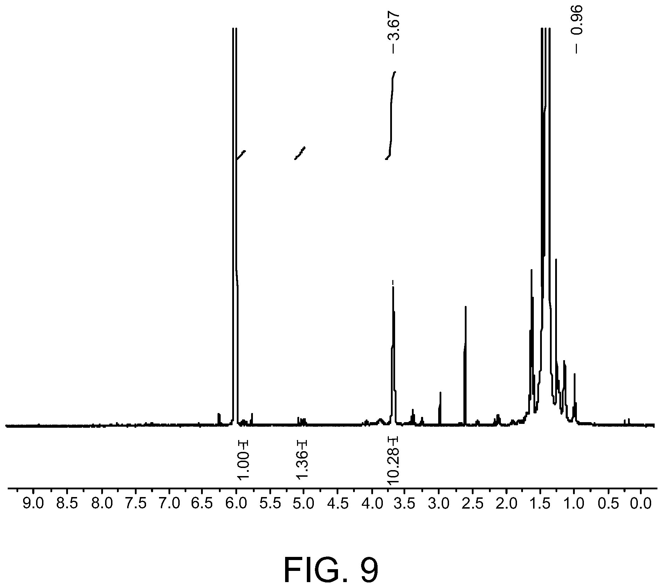

Referring to Scheme V a dihydroxyl polyethylene-based telechelic polymer was synthesized. In Scheme V, n represents the number of repeating groups (e.g., CH₂). In an inert atmosphere glovebox, a 100 mL Schlenk bomb was charged with 180 mg (0.09 mmol) of divinyl PE(Mₙ = 1,100 g/mol, Example 3) in 15 mL of toluene. To that stirring solution, 0.36 mL of 9-BBN (0.5 M in THF) was added dropwise, and the sealed reaction mixture was allowed to stir for 12 h at 80 °C outside of the glovebox. After 12 h, 0.5 mL of 10% NaOH solution was added dropwise under a flow of nitrogen and allowed to stir for 10 min at 80 °C. Then, to the Schlenk bomb, 0.03 mL of 50% H₂O₂ (0.36 mmol) was added under nitrogen. The reaction was then allowed to stir for 12 h at 120 °C, after which time 30 mL of methanol was added to the bomb to precipitate the product as a white solid. This solid was collected by filtration, washed twice with 30 mL portions of methanol, and then dried under vacuum. The ¹H NMR spectrum of the resulting solid revealed that 77% of the original vinyl groups were converted to alcohols, based on vinyl group integration against the chain-end methylene resonance of the product (FIG. 9).

### Example 5 (Synthesis of Hydroxyl-telechelic Polyolefin-based Polymer using BH₃-SMe₂)

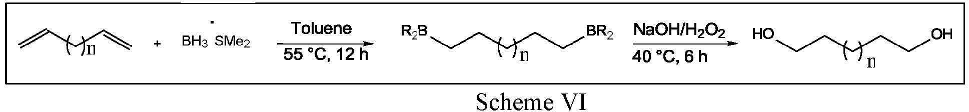

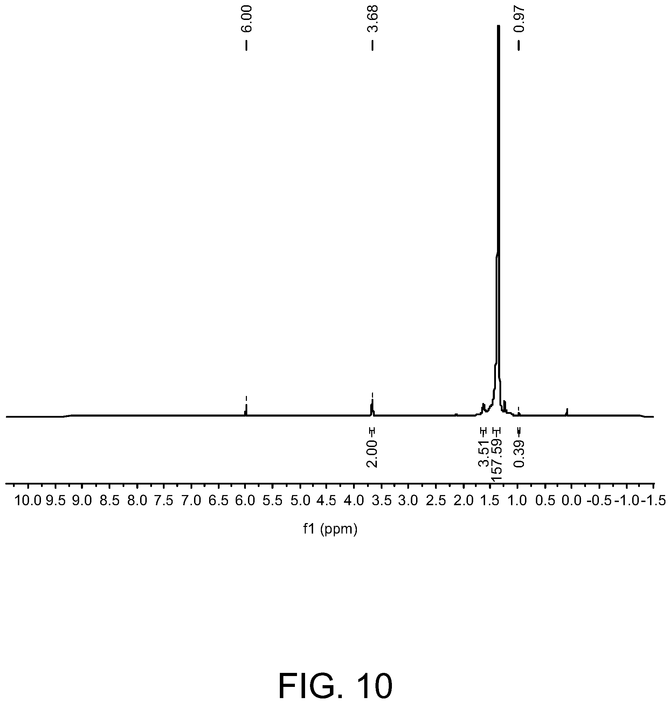

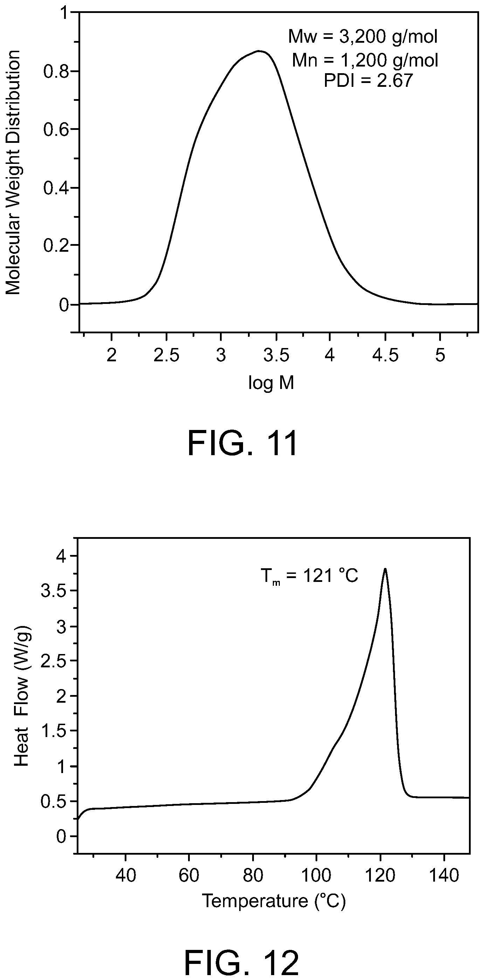

Referring to Scheme VI a dihydroxyl polyethylene-based telechelic polymer was synthesized. In Scheme VI, n represents the number of repeating units (e.g., CH₂). In an inert glovebox atmosphere, a 100 mL Schlenk bomb was charged with 268 mg (0.21 mmol) of divinyl-PE (Mₙ = 1,260 g/mol, Example 3) in 15 mL of toluene. To that stirring solution, 0.08 mL (0.85 mmol) of BH₃·SMe₂ was added dropwise, and the sealed reaction mixture was allowed to stir for 5 h at 55 °C outside of the glovebox. After 5 h, 1.5 mL (7.24 mmol) of 10% NaOH solution was added dropwise under nitrogen flow and the reaction was allowed to stir for 10 min. The Schlenk bomb was then kept in an ice bath followed by addition of 0.6 mL (10.2 mmol) 50% H₂O₂ under nitrogen. The bomb was then allowed to warm to ambient temperature and then stirred for 6 h at 40 °C. After that time, 30 mL of methanol was added to the bomb to precipitate the product as a white solid. The solid was collected by filtration, washed twice with 30 mL of methanol, and dried under vacuum to yield 236 mg of hydroxyl telechelic polyolefin-based polymer of the present invention as a while solid. ¹H NMR analysis of the resulting product revealed complete consumption of the starting divinyl-PE, and an average alcohol functionality of 1.78 per chain (FIG. 10).¹H NMR (400 MHz, TCE-*d*₂, 120 °C): 3.68 (s, 4H, C*H*₂OH), 1.63 (p, *J =* 6.8 Hz, 8H, C*H₂*)*,* 1.36 (s, 315H, C*H₂*)*,* 0.97 (s, 1H, C*H*₃). GPC (TCB, 150 °C): Mₙ = 1,200 g/mol, M_{w} = 3,200 g/mol, Ð = 2.67 (FIG. 11). DSC: Tₘ = 121 °C (FIG. 12).

Although embodiments of the present application and their advantages have been described in detail, it should be understood that various changes, substitutions, and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A process to produce hydroxyl telechelic polyolefin-based polymers, the process comprising:
(a) contacting a di-olefinic magnesium composition with an olefin monomer in the presence of a polymerization catalyst at a temperature of 25 °C to 130 °C and a pressure of 0.1 MPa to 0.9 MPa, preferably 0.25 MPa to 0.4 MPa to produce a vinyl telechelic polyolefin-based magnesium intermediate;
(b) reacting the vinyl telechelic polyolefin-based magnesium intermediate with iodine (I₂) at 20 °C to 30 °C to produce an iodovinyl polyolefin-based intermediate; and
(c) subjecting the iodovinyl-polyolefin-based intermediate to conditions suitable to produce an α,ω-hydroxyl-telechelic polyolefin-based polymer.

2. The process of claim 1, wherein step (c) further comprises:
(i) contacting the iodovinyl-polyolefin-based intermediate with base at a temperature of 20 °C to 130 °C, preferably 95 °C to produce a vinyl-telechelic polyolefin-based polymer; and
(ii) subjecting the vinyl-telechelic polyolefin-based polymer to conditions sufficient to produce the α,ω-hydroxyl-telechelic polymer.

3. The process of any one of claims 1 or 2, wherein the telechelic polyolefin-based polymer has a functionality of 1.7 to 2.00, preferably above 1.95.

4. The process of any one of claims 2 or 3, wherein step (ii) comprises subjecting the telechelic polyolefin-based polymer to a hydroboration-oxidation process to produce the α,ω-hydroxyl-telechelic polyolefin-based polymer.

5. The process of claim 4, wherein the hydroboration-oxidation process comprises contacting a telechelic polyolefin-based polymer solution with a 9-borobicyclo[3.3.1]nonane (9-BBN) at 70 °C to 90 °C to produce a hydroborated telechelic polyolefin-based polymer intermediate.

6. The process of claim 4, wherein the hydroboration-oxidation process comprises contacting a telechelic polyolefin-based polymer solution with borane dimethyl sulfide (BH₃-SMe₂) at 50 °C to 70 °C to produce a hydroborated telechelic polyolefin-based polymer intermediate.

7. The process of any one of claims 5 or 6, wherein the hydroborated telechelic polyolefin-based polymer intermediate is contacted with an oxidizing agent at 25 °C to 130 °C to produce the α,ω-hydroxyl-telechelic polyolefin-based polymer.

8. The process of claim 1, wherein the iodine to magnesium (I/Mg) molar ratio ranges from 2 to 2.5 preferably 2.

9. The process of claim 1, further comprising purifying the di-olefinic magnesium composition prior to step (a) by:
(i) dissolving a di-olefinic magnesium composition crude product in a hydrocarbon solvent preferably pentane to produce a di-olefinic magnesium crude product / hydrocarbon solution;
(ii) filtering the di-olefinic magnesium crude product / hydrocarbon solution through a filter aid; and
(iii) removing the hydrocarbon solvent to produce the di-olefinic magnesium composition of step (a).

10. The process of claim 9, wherein the di-olefinic magnesium composition crude product is prepared by:
(i) contacting a terminally halogenated-1-olefin with a magnesium source in polar aprotic solvent at 0 °C to 25 °C under an inert atmosphere to produce a terminal magnesium halogenated-1-olefin composition;
(ii) contacting the terminal magnesium halogenated-1-olefin composition with dioxane to produce the di-olefinic magnesium composition and isolating the di-olefinic magnesium crude product.

11. The process of claim 10, wherein the terminally halogenated-1-olefin has a carbon number of 8 to 20, preferably 9 to 15, more preferably 10 to 12.

12. The process of claim 11, wherein the terminally halogenated-1-olefin is 11-bromo-1-undecene.

13. The process of claim 1, wherein the polymerization catalyst is a neodymium-based catalyst.

14. The process of claim 13, wherein the neodymium-based catalyst is (C₅Me₅)₂NdCl₂Li(OEt₂)₂.

15. The process of any one of claims 13 or 14, wherein the neodymium-based catalyst to magnesium molar percentage ranges from 0.5 % to 5 mol%, preferably 3 mol %.
